# EUROPEAN PATENT SPECIFICATION

(11) **EP 1 271 414 B1**
(45) Date of publication and mention of the grant of the patent: **29.10.2003**
(21) Application number: 01115201.4
(22) Date of filing: 22.06.2001
(51) Int. Cl.: G06T 17/40

(54) **Generating a drawing symbol in a drawing**
Generierung eines Zeichensymbols in einer Zeichnung
Génération d' un symbole à dessin dans un dessin

(43) Date of publication of application: 02.01.2003
(73) Proprietor: Autodesk, Inc., San Rafael, California 94903 (US)
(72) Inventor: Stejskal, Jirka, 405 01 Decin 1 (CZ)
(74) Representative: Dendorfer, Claus, Dr.

(56) References cited:
- EP-A- 0 618 542
- EP-A- 0 959 421
- GB-A- 2 255 661
- US-A- 5 351 196

## Description

The invention concerns the field of computer aided design programs and, in particular, the computer-assisted processing of models and drawings.

The use of computer aided design techniques has become common engineering practice. Available computer aided design programs range from simple drawing tools to sophisticated systems that cover the whole range of product design and possibly further aspects like engineering or manufacturing or quality control. The term "computer aided design program", which will also be abbreviated to "CAD program" in the present document, should therefore be understood in its broadest meaning as any computer program that contains a drawing and/or design component and possibly further components. A widely used CAD program is the AutoCAD® program, which is manufactured in various versions by Autodesk, Inc., San Rafael, USA.

A typical CAD design process comprises a modeling phase and a production preparation phase. During the modeling phase, the CAD program is used to create a model of the part or structure or apparatus that is to be designed. This model often has a complex, three-dimensional form that is generated from simpler, two-dimensional shapes by means of CAD program functions like, e.g., extrude, revolve, bend, sweep, rib, and so on. For the production preparation phase, the designer uses CAD program functions to generate the required two-dimensional engineering drawings that show various views of the model, e.g., front, side and plan views, perspective views, enlarged views of important portions of the model, and so on. These two-dimensional engineering drawings are then used in the subsequent production process.

It is possible in present CAD programs to add standardized drawing symbols to the two-dimensional engineering drawings. For example, a surface finish symbol (which specifies the required quality of the surface and/or the method to be used during the production process to machine the surface) may be created and added to the drawing. Other drawing symbols that may be created by the designer include a welding symbol, an edge burr symbol, a feature control frame symbol and so on. All these symbols, however, are elements of the two-dimensional drawing and not of the model. If the designer wants to re-use the model (or a part thereof) in a different context (i.e., a different assembly), all the drawing symbols must be created again from scratch. This is a cumbersome and error-prone process that may possibly lower the overall quality of the design. It would be desirable to avoid these problems and to make the design process and especially the process of re-using models (or portions thereof) in new contexts both more convenient and less susceptible to errors.

In the present version of the Mechanical Desktop® product, which is manufactured by Autodesk, Inc. as an extension to the AutoCAD® product, it is further possible to attach non-graphical attribute data to an element (e.g., body, face, edge) of a model. For example, data relating to a bill of materials (BOM) attribute may be attached to a body entity of the model. This data may be used to create a bill of materials (BOM) or a parts list. It would be desirable to provide support for other important data elements like, for example, data elements related to the subsequent manufacturing and production stages.

EP 0 959 421 A2 discloses an electronic notebook for maintaining design information. In response to receiving a request to add note information corresponding to a design, the notebook automatically copies at least a portion of the design to a note of the electronic notebook. The user is provided with a functionality to enrich the note in the design notebook with extra design information. This extra design information is only stored in the design notebook. It does not become part of the model processed by the CAD program. Thus the extra design information is lost and must be added again from scratch when a new snapshot of the design is generated.

EP 0 618 542 A2 discloses a system in which two-dimensional drawings are automatically generated from three-dimensional model data. Features of the model are drawn according to one of a plurality of predefined drawing rules. The applicable drawing rule is selected on the basis of classification data like a feature classification and a direction of view. The three-dimensional model data comprises data tables for each feature of the model. Each data table contains all data elements relevant to the definition of the corresponding feature.

An object of the present invention is to solve the problems indicated above at least in part. A particular object of the present invention is to provide, integrated within a CAD program, support for attribute data items that relate to different types of entities of a model processed by the CAD program. In some embodiments of the invention, such attribute data items may relate to the subsequent production process and may correspond to drawing symbols in the engineering drawings. It is a further object in some embodiments of the invention to facilitate the re-use of models in new engineering projects.

The present invention comprises a method having the features of claim 1, a CAD computer program product having the features of claim 11 and an apparatus having the features of claim 12. The dependent claims define preferred embodiments of the invention.

The present invention is based on the idea to implement, in a CAD program, functions for processing attributes with a particular combination of properties.

First, each attribute has a scope selected from a variety of different possible scopes. Each scope relates to the type of entities of the CAD program for which the corresponding attribute is adapted. For example, attributes that specify surface finish properties will have a scope "face" (corresponding to entities of the type "face" in the CAD model) while attributes that specify properties of an edge will have a scope "edge" (corresponding to entities of the type "edge" in the CAD model). This feature greatly enhances the flexibility of the present invention since attributes may be used that relate to a variety of different properties of the CAD model or portions thereof. In particular, such attributes may relate to features that are relevant for the production and machining of the part or structure or apparatus that is being designed.

A second important feature of the present invention is that the attribute object is associated with the model data structure to form an extended model data structure. In other words, the attribute data belongs to the model and not (or at least not exclusively) to a drawing generated from the model. This makes it possible to maintain the attribute data when the designer re-uses the model in another (new or modified) context, thus enhancing the value and expressiveness of CAD models. When engineering drawings are created from the model, an appropriate drawing symbol that represents the attribute will be generated automatically and shown in the drawing. It is no longer necessary to re-create the desired attribute symbols when the model is re-used. Thus the overall design process becomes more efficient, and possible sources of error are avoided.

It is a further feature of the invention that the engineering drawing is generated in a way such that the drawing symbol is depicted in graphical association with the entity of the model to which the attribute belongs. This feature improves the quality of the generated drawings and further distinguishes the present invention from prior art methods of automatically generating a bill of materials (BOM).

In preferred embodiments of the invention, the extended model data structure is organized in a way such that the attribute object is connected with one or more elements of the original model data structure. Thus a link is created between the attribute and the entity of the model to which the attribute refers. This link can be used for providing the inventive functionality when the drawing is generated. Preferably, the link is preserved when the model (or a part thereof that is within the scope of the attribute) is stored or re-used in a different context.

In preferred embodiments the drawing symbol corresponds to a further data structure that is associated with the attribute object and/or the extended model data structure. A unidirectional or a bidirectional link may be employed to implement this association. Some embodiments of the invention provide the function that, when the user modifies the drawing symbol, the link is followed in the direction from the drawing symbol object to the attribute object, and the attribute object (which is part of the extended model data structure) is modified correspondingly. This makes it possible to automatically adapt the 3D model to any changes that are entered by the user in the 2D view.

It is preferred that the model is a 3D model and/or the drawing is a 2D view of the model. The drawing symbol may comprise a graphical form and/or an alphanumerical or numerical or textual indication, the indication representing a value of the attribute. According to further preferred embodiments of the invention, the drawing symbol is automatically generated to conform to a drawing standard. The applicable drawing standard may be selected only once when the CAD program is installed, or it may be freely selectable by the user in a preferences menu.

It is further preferred that an attribute may concern a property of a face of the model or of an edge of the model or of a welded edge of the model. The scope of the attribute may be set correspondingly. It is further possible in some embodiments of the invention to provide a variety of different kinds of attributes. These kinds may be sub-classifications within the individual scopes. For example, an attribute that has the scope "face" (corresponding to face type entities of the model) may describe the surface finish of the face (kind "surface finish") or other properties of the face.

Preferred embodiments of the computer program product and of the apparatus of the present invention also comprise features corresponding to the features described above and/or to the features defined in the dependent method claims.

Further features, objects and advantages of the invention will be apparent from the following detailed description of several sample embodiments thereof. Reference is made to the schematic drawings, in which:
Fig. 1 shows several steps of a design process that is performed using a sample embodiment of the present invention,
Fig. 2 shows a continuation of the design process of Fig. 1,
Fig. 3 shows a continuation of the process of Fig. 1 and Fig. 2, and
Fig. 4 shows a class diagram depicting an example of the organization of object data in a sample embodiment of the present invention.

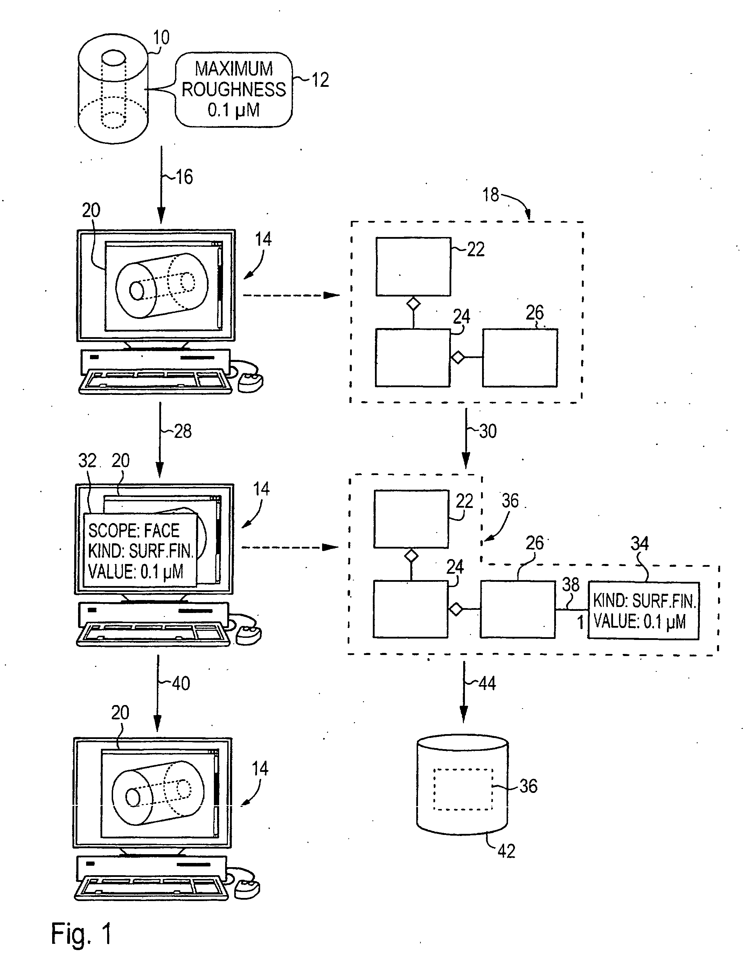

The design process depicted in Fig. 1, Fig. 2 and Fig. 3 concerns a model 10 which, in the present example, is a cylinder with a hole along its central longitudinal axis. An attribute 12 defines a surface finish property of the outer curved face of the cylinder, namely, that its maximum roughness is at most 0.1 µm.

The design process is performed using a computer 14. In the present sample embodiment, the computer 14 is a well-known personal computer or workstation comprising a main unit, a keyboard, a mouse and a display unit. In the present sample embodiment, the computer 14 executes a CAD program based on the AutoCAD® CAD program that has been extended to implement the functionality of the present invention. In a manner that is well-known per se, the CAD program performs a large variety of functions for displaying and editing designs and drawings.

The design process of Fig. 1 starts with the designer creating the model 10 using the CAD program. This first step from the abstract idea to the computer-based design document of the model 10 is denoted by arrow 16 in Fig. 1. The CAD program internally represents the model 10 by a model data structure 18, and it displays a view of the model 10 (in the present example, a perspective wire-frame view) in a window 20 on the display unit of the computer 14. No attributes have yet been defined.

The model data structure 18 is made up by a plurality of objects that are linked by reference pointers. A body object 22 is the owner of several loop objects, of which only one loop object 24 is shown in Fig. 1 for the sake of clarity. The ownership relation is designated by the small square on the connection line between the objects 22 and 24. The loop object 24 in turn is the owner of a face object 26 and possibly further face objects. Each of these objects holds data that concerns the corresponding entity of the model 10. It is assumed in the present example that the body object 22 corresponds to the cylindrical body of the model 10, and that the face object 26 corresponds to the outer curved face of this body. The model data structure 18 in itself is well known, and it is also used in prior art CAD programs.

An important feature of the present invention is that the user may attach attributes to the model 10. This step is denoted by arrow 28 in Fig. 1, and the corresponding internal processing steps, which are performed by the CAD program of the present invention, are represented by arrow 30. The possible attributes have a variety of different scopes. This means that the attributes are intended for designating properties of a variety of different types of entities of the model 10. For example, the attribute 12 has the scope "face" since the maximum roughness value is intended to designate a property of a face type entity of the model 10. Other possible attribute scopes in the present example are "edge" and "face and/or edge", the latter meaning that the attribute may be attached to a face and/or an edge of the model. The attributes attached to the model 10 may be used in the process of crating a drawing of the model 10 during the further processing of the model 10 (e.g., to obtain NC programming data) in the original context or in a different context.

In order to define an attribute, the user first selects the entity of the model 10 to which the attribute is to be attached. In the present example, the user selects or marks the outer curved face of the model 10, thus denoting that he or she wants to attach an attribute to this face. Then the user opens an attribute dialog box 32. The attribute dialog box 32 contains a plurality of fields for inputting and displaying all parameters necessary for defining the attribute. For the sake of simplicity, only the three fields "scope", "kind" and "value" are shown in Fig. 1. When the attribute dialog box 32 opens, its "scope" field already contains the proper value "face", corresponding to the type of the entity of the model 10 that has been selected or marked by the user. If required, the user may change this value to "face and/or edge" or to another scope that is broader than the type of the selected entity.

The user now fills in the other fields of the attribute dialog box 32. The field "kind" may contain a predefined list of available kinds of attributes whose scope matches the entry in the "scope" field. Each. attribute kind corresponds to a kind of possible properties of the entity of the model for which the attribute is intended. In the present simple example, only a single kind of attributes of the scope "face" exists, namely the kind "surface finish" (which is abbreviated to "surf.fin." in Fig. 1 to Fig. 3). It is apparent that several different kinds of attributes may be provided for a particular attribute scope in more sophisticated implementations of the present invention. On the other hand, simpler embodiments of the present invention may not distinguish between different kinds of attributes within a given scope. This means that, in these simpler embodiments, the scope of the attribute uniquely determines the properties that may be defined by the attribute. No "kind" field in the attribute dialog box 32 would be necessary in these embodiments.

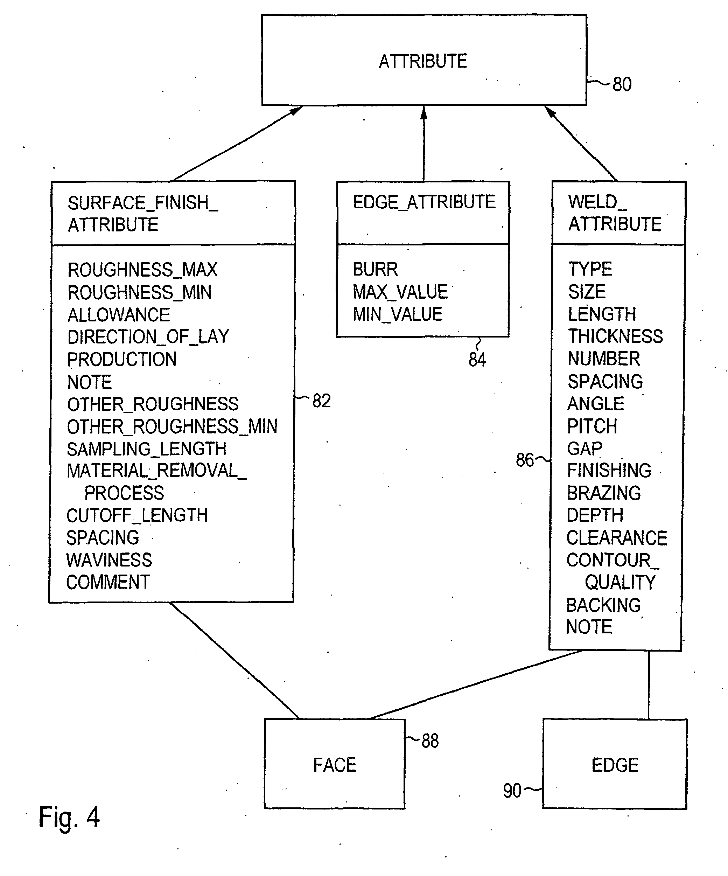

For the sake of simplicity, only a single "value" field is shown in the attribute dialog box 32 of Fig. 1, namely that for entering the maximum roughness value of the surface. Typically, however, the attribute dialog box 32 contains a plurality of data entry fields for each of the plurality of values that can be specified in an attribute of a given scope and kind. The possible values depend on the scope and kind of the attribute, and consequently the selection of "value" fields in the attribute dialog box 32 may change after the user has selected the attribute kind. For example, an attribute of the kind "surface finish" may contain all values necessary for properly specifying the quality of the surface (minimum and maximum roughness, production method, measurement method, and so on). A full example of the possible data elements of a "surface finish" attribute will be given below in connection with Fig. 4.

The above-described user actions of defining the attribute 12 are mirrored by corresponding changes (represented by arrow 30) in the data structures processed by the CAD program. In particular, an attribute object 34 is created and added to the model data structure 18 to create an extended model data structure 36. In the extended model data structure 36 the attribute object 34 is attached to the face object 26 via a reference link 38. Only a single attribute object 34 of the kind "surface finish" may be associated with the face object 26. This is symbolized by the number "1" next to the reference link 38.

The attribute object 34 contains data elements that correspond to the data entered by the user into the attribute dialog box 32. In other words, the attribute object 34 is a data holder for all values necessary for defining the properties expressed by the attribute 12 (in the present example, all values necessary for specifying the surface quality). The scope of the attribute 12 and the entity of the model 10 to which the attribute 12 refers follow from the fact that the reference link 38 connects the attribute object 34 to the face object 26.

After the attribute object 34 has been created, the attribute dialog box 32 is closed (arrow 40 in Fig. 1), and the computer 14 again displays a view of the model 10 in window 20. Depending on the user preferences set in the CAD program, some indication that the attribute 12 has been defined may or may not be shown in the view of the 3D model 10. The user may now continue with the design process. When the user issues an appropriate command, the extended model data structure 36 is saved in a data repository 42, for example a local or networked data file accessible by the computer 14. This saving operation is represented by arrow 44 in Fig. 1. The attribute object 34 is part of the saved data. The data may be saved in an internal format or in a public markup language format like, for example, an XML format.

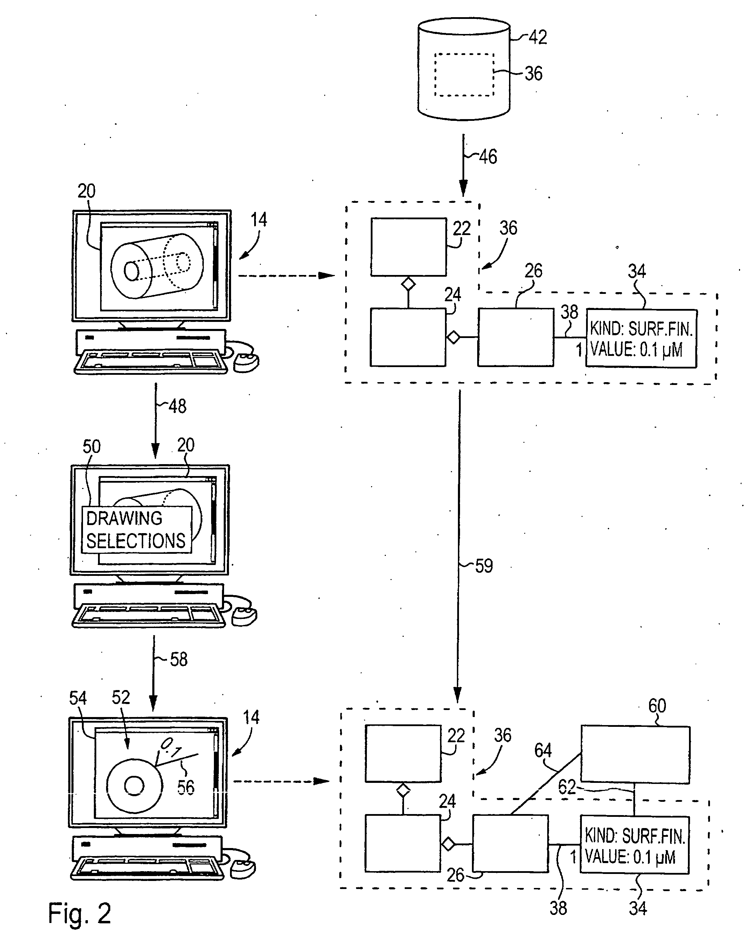

It is apparent from the above that the attribute 12 is now attached to the entity of the model 10 to which it refers. Whenever this entity of the model 10 is used or re-used (in the original context or in a different context), the attribute data is accessible and may be employed in a variety of ways. One of these possibilities of using the attribute data is the automatic generation of appropriate drawing symbols, which will be explained below in connection with Fig. 2. Additional possibilities for employing the attribute data can be found in the generation of commands (NC programs) for computer controlled production machinery and in the use of attributed models in part catalogs. Appropriate application program interfaces (APIs) are provided in the present sample embodiment for setting and accessing attribute values and for manipulating (e.g., creating or querying) attributes.

Fig. 2 shows the steps of creating a 2D engineering drawing from the model 10. First the extended model data structure 36 is loaded into the computer 14 from the data repository 42. The loading process, which is initiated by an appropriate command of the user, is represented by arrow 46 in Fig. 2. The computer 14 now displays the same view of the model 10 as shown in the last line of Fig. 1. It is apparent that the saving and loading steps (arrows 44 and 46) are not essential parts of the present sample run. They have just been included to demonstrate that the attribute object 34 is preserved in the extended model data structure 36 even if the model 10 is saved and re-loaded. The results of the sample run would be the same if the saving and loading steps were omitted.

The user now issues a command to generate a 2D production drawing of the model 10 (this step is represented by arrow 48). A dialog box 50 is shown in which the users enters details of the drawing to be generated (direction of view, amount of detail to be shown, and so on). We assume in the present example that the user chooses a front view of the model 10 in which all available symbols are shown. After confirming his or her choices in the dialog box 50, the CAD program automatically generates the requested production drawing 52. The drawing 52 is displayed in a new window 54 on the screen of the computer 14. The drawing 52 comprises the chosen 2D representation of the model 10 and a drawing symbol 56 that has automatically been generated to represent the attribute 12. These steps are denoted by arrow 58 in Fig. 2.

Arrow 59 in Fig. 2 represents the internal processing steps that are performed for generating the drawing 52. During these steps, all entities of the model 10 that are visible in the drawing 52 are processed. It is tested for all these entities (corresponding to objects in the model data structure 18) whether or not an attribute (corresponding to an attribute object in the extended model data structure 36) is attached to the entity. For each attribute that is found in this process, a corresponding drawing symbol object 60 is created, and the appropriate drawing symbol 56 is shown in the drawing 52. The drawing symbol object 60 references the attribute object 34 by means of a bidirectional link 62. A further link 64 is provided between the drawing symbol object 60 and the object to which the attribute object 34 is attached (in the present example, the face object 26).

It should be noted that the drawing symbol object 60 does not merely represent a collection of lines and characters, but that it is an intelligent object holding the data necessary for generating the drawing symbol 56. In the present example, the drawing symbol 56 comprises a graphical form and a numerical indication. The graphical form is selected from an appropriate library, possibly depending of the attribute scope and/or kind and/or at least one of the attribute values. For example, if one of the attribute values specifies a machining method, then this machining method may be represented by the graphical form. The numerical indication of the drawing symbol 56 shows the maximum roughness value as specified by the "value" data item of the attribute object 34. The drawing symbol 56 is shown in graphical association with the entity of the model 10 to which the drawing symbol 56 belongs. In the present example, the point of the drawing symbol 56 touches a contour line of the outer curved face of the model 10, thus clearly signifying the association between the attribute 12 and the corresponding entity of the model 10.

The generated drawing symbol 56 and its arrangement within the drawing 52 conform to the applicable drawing standard which, in the present example, is ASME Y14.36M. It is possible to select other standards (e.g., DIN ISO 1302) for generating or re-generating drawing symbols. No re-entry of attribute data is necessary when a new standard is selected since the data contained in the attribute object 34 is independent of the drawing standard. Only the shape of the graphical part of the drawing symbol 56 (and possibly the location of the numerical indication) changes when a new standard is selected. In many embodiments, it is necessary to update the drawing symbol object 60 when selecting a new drawing standard. This can be done automatically on the basis of the data contained in the attribute object 34.

The drawing 52 generated by the steps described above can be used in the further production process. Even if some final adjustments may still be required, the process of finishing the production drawings is much more straightforward than in prior art methods. This is especially true if part models (e.g., from third party suppliers) have been imported into the model to be designed, or if portions from other models have been re-used. It is stressed once more that the attribute 12 is attached to the entity of the model 10 to which the attribute 12 belongs, such that the attribute 12 is preserved whenever this entity is used or re-used, irrespective of the current model context.

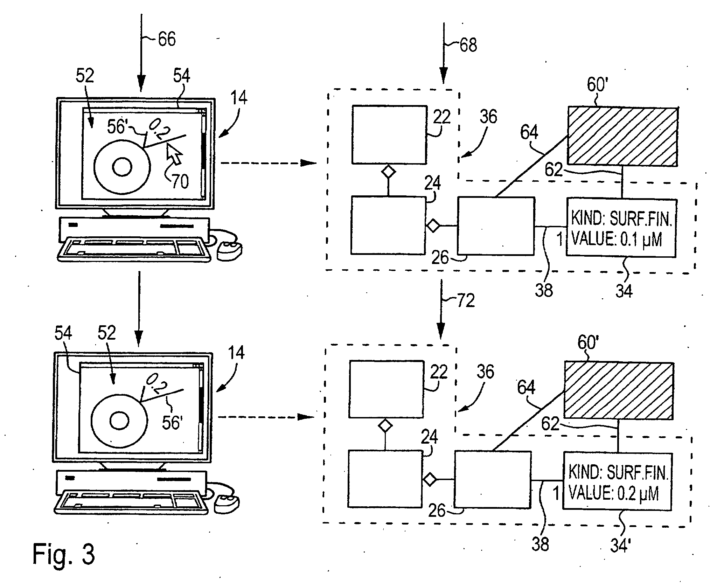

Fig. 3 shows a possible continuation of the above design process in which changes that are made to the drawing symbol 56 (and the drawing symbol object 60) are automatically transferred to the attribute object 34 of the extended model data structure 36. Arrows 66 and 68 of Fig. 3 are assumed to continue from the last line shown in Fig. 2.

In the first line of Fig. 3, the user accesses the numerical indication "0.1" of the drawing symbol 56 and changes it to "0.2". A mouse cursor 70 is shown in the window 54 to represent this operation. The CAD program has already updated both the drawing symbol 56 (yielding an updated drawing symbol 56') and the corresponding drawing symbol object 60 (yielding an updated drawing symbol object 60'). In a further processing step, which is performed automatically, the CAD program follows the bidirectional link 62 from the updated drawing symbol object 60' to the corresponding attribute object 34. The attribute object 34 is then also updated (yielding an updated attribute object 34') by entering the newly defined maximum roughness into its "value" data field. These automatic processing steps are represented by arrow 72 in Fig. 3.

The updated attribute object 34' is part of the extended model data structure 36. Thus the new attribute value will again be preserved if the model 10 is re-used.

The class diagram of Fig. 4 depicts a few of the object classes that are used in the present sample embodiment and their hierarchical structure. A superclass 80 "attribute" has a plurality of specialization classes 82, 84, 86, namely one for each kind of attribute that may be defined in the system. The attribute class 82 "surface finish attribute" has been used as a running example in the above description. Attributes of this class hold all data related to the quality of the surface to be produced and to the prescribed production method. Attributes of the scope "face" and the kind "surface finish" are in this class 82, and consequently the class is associated with the object class 88 "face".

Attribute class 84 "edge attribute" concerns properties (e.g., burr size and tolerances) of an edge. Attributes of this class have the scope "edge". In some alternative embodiments, attributes in class 84 may also have the scope "face and/or edge", meaning that they can be attached to an "edge" object or to a "face" object (in the latter case, the attribute applies to all edges of the face). Attribute class 86 "weld attribute" concerns the welding process. Attributes of this class hold data like, e.g., the welding type, weld size, and production notes. Their scope is "face and/or edge", and consequently attribute class 86 is associated with object class 90 "edge" and/or with object class 88 "face". A complex welding connection may be described by two objects of class 86 that are associated with two coinciding edges belonging to different faces.

An example of a further attribute class, which is not implemented in the present sample embodiment, is a class for defining geometric tolerance attributes (e.g., tolerances for parallels, feature control frame, and so on). Preferably the data that is displayed in a feature control frame should be partially set on the basis of constraints that are applied by the user.

The superclass 80 defines a common interface which can be used to access the data of any attribute by means of an identifier or name of the data element to be accessed. The superclass 80 is also responsible for proper attachment of the individual attribute objects to the various objects of the model data structure 18.

It can thus be seen that the invention facilitates the automatic generation of production drawings in a variety of ways. The particulars contained in the above description of sample embodiments should not be construed as limitations of the scope of the invention, but rather as exemplifications of preferred embodiments thereof. Many variations are possible and will be readily apparent to persons skilled in the art. Accordingly, the scope of the invention should be determined not by the embodiments illustrated, but by the appended claims.

## Claims

1. A method for automatically generating, by a CAD program, a drawing symbol (56) in a drawing (52), said drawing (52) representing a view of a model (10), said model (10) being represented by a model data structure (18) processed by said CAD program, said method comprising the steps of:
- creating an attribute object (34), said attribute object (34) representing an attribute (12) of at least one entity of said model (10), said attribute (12) having a scope selected from one of a plurality of different scopes, said scope corresponding to the type of entities of the model (10) for which said attribute (12) is intended,
- associating said attribute object (34) with said model data structure (18) to form an extended model data structure (36) that is further processable by said CAD program,
- generating said drawing (52) from said extended model data structure (36), said drawing (52) showing said entity of said model (10) at least partially and further comprising a drawing symbol (56) that represents said attribute (12), said drawing symbol (56) being shown in graphical association with said at least partially shown entity of said model (10).

2. The method of claim 1,
wherein, in said extended model data structure (36), said attribute object (34) is linked with at least one element of said model data structure (18) that represents said at least one entity of said model (10) to which said attribute (12) refers, such that a link is provided between said attribute (12) and said entity of said model (10).

3. The method of claim 2,
wherein said attribute (12) remains linked with said entity of said model (10) when said model (10) is stored and/or said entity is re-used in another model.

4. The method of one of claims 1 to 3,
wherein said drawing symbol (56) corresponds to a drawing symbol object (60) that is associated with said attribute object (34).

5. The method of claim 4,
further comprising the steps of:
- receiving a command to modify said drawing symbol (56),
- modifying said drawing symbol object (60) correspondingly, and
- modifying said attribute object (34) correspondingly.

6. The method of one of claims 1 to 5,
wherein said model (10) is a 3D model, and/or wherein said drawing (52) is a 2D view of said model (10).

7. The method of one of claims 1 to 6,
wherein said plurality of different scopes includes scopes for attributes (12) that are intended for face type entities of said model (10) and/or for edge type entities of said model (10).

8. The method of one of claims 1 to 7,
wherein said attribute (12) belongs to ne of a plurality of different kinds of attributes.

9. The method of one of claims 1 to 8,
wherein said drawing symbol (56) comprises a graphical form and an alphanumerical or numerical or textual indication, and wherein said attribute object (34) comprises an attribute value that is represented by said indication.

10. The method of one of claims 1 to 9,
wherein said drawing symbol (56) is automatically generated to conform to a drawing standard selected from a plurality of possible drawing standards.

11. A CAD computer program product for execution by at least one computer (14) for automatically generating a drawing symbol (56) in a drawing (52), said drawing (52) representing a view of a model (10), said model (10) being represented by a model data structure (18) processed by said CAD computer program product, said CAD computer program product comprising instructions for causing said at least one computer (14) to perform the steps of the method of one of claims 1 to 10.

12. An apparatus comprising at least one computer (14), said computer (14) being programmed for performing the steps of the method of one of claims 1 to 10.

## Patentansprüche

1. Ein Verfahren zum automatischen Erzeugen, durch ein CAD-Programm, eines Zeichnungssymbols (56) in einer Zeichnung (52), wobei die Zeichnung (52) eine Ansicht eines Modells (10) darstellt, das Modell (10) durch eine von dem CAD-Programm verarbeitete Modelldatenstruktur (18) repräsentiert wird, und das Verfahren die Schritte aufweist:
- Erzeugen eines Attributobjekts (34), wobei das Attributobjekt (34) ein Attribut (12) mindestens einer Einheit des Modells (10) repräsentiert, das Attribut (12) einen Geltungsbereich hat, der aus einer Mehrzahl unterschiedlicher Geltungsbereiche ausgewählt ist, und der Geltungsbereich dem Typ von Einheiten des Modells (10), für den das Attribut (12) vorgesehen ist, entspricht,
- Zuordnen des Attributobjekts (34) zu der Modelldatenstruktur (18), um eine erweiterte Modelldatenstruktur (36) zu bilden, die von dem CAD-Programm weiter verarbeitbar ist,
- Erzeugen der Zeichnung (52) aus der erweiterten Modelldatenstruktur (36), wobei die Zeichnung (52) die Einheit des Modells (10) zumindest zum Teil zeigt und ferner ein Zeichnungssymbol (56) aufweist, das das Attribut (12) repräsentiert, wobei das Zeichnungssymbol (56) in graphischer Zuordnung zu der zumindest zum Teil gezeigten Einheit des Modells (10) gezeigt wird,

2. Das Verfahren nach Anspruch 1,
bei dem das Attributobjekt (34) in der erweiterten Modelldatenstruktur (36) verknüpft ist mit mindestens einem Element der Modelldatenstruktur (18), das die mindestens eine Einheit des Modells (10), auf die sich das Attribut (12) bezieht, repräsentiert, so daß eine Verknüpfung zwischen dem Attribut (12) und der Einheit des Modells (10) bereitgestellt wird.

3. Das Verfahren nach Anspruch 2,
bei dem das Attribut (12) mit der Einheit des Modells (10) verknüpft bleibt, wenn das Modell (10) gespeichert wird und/oder die Einheit in einem anderen Modell wiederverwendet wird.

4. Das Verfahren nach einem der Ansprüche 1 bis 3,
bei dem das Zeichnungssymbol (56) einem Zeichnungssymbolobjekt (60) entspricht, das mit dem Attributobjekt (34) in Beziehung steht.

5. Das Verfahren nach Anspruch 4,
ferner mit den Schritten:
- Erhalten eines Befehls zum Modifizieren des Zeichnungssymbols (56),
- entsprechendes Modifizieren des Zeichnungssymbolobjekts (60), und
- entsprechendes Modifizieren des Attributobjekts (34).

6. Das Verfahren nach einem der Ansprüche 1 bis 5,
bei dem das Modell (10) ein 3D-Modell ist, und/oder bei dem die Zeichnung (52) eine 2D-Ansicht des Modells (10) ist.

7. Das Verfahren nach einem der Ansprüche 1 bis 6,
bei dem die Mehrzahl unterschiedlicher Geltungsbereiche Geltungsbereiche für Attribute (12) aufweist, die für Einheiten des Modells (10) vom Flächentyp und/oder für Einheiten des Modells (10) vom Kantentyp vorgesehen sind.

8. Das Verfahren nach einem der Ansprüche 1 bis 7,
bei dem das Attribut (12) einer Art aus einer Mehrzahl unterschiedlicher Arten von Attributen zugehört.

9. Das Verfahren nach einem der Ansprüche 1 bis 8,
bei dem das Zeichnungssymbol (56) eine graphische Form und eine alphanumerische oder numerische oder textuelle Angabe aufweist, und bei dem das Attributobjekt (34) einen Attributwert aufweist, der durch die Angabe dargestellt wird.

10. Das Verfahren nach einem der Ansprüche 1 bis 9,
bei dem das Zeichnungssymbol (56) automatisch so erzeugt wird, daß es einer aus einer Mehrzahl möglicher Zeichnungsnormen ausgewählten Zeichnungsnorm entspricht.

11. Ein CAD-Computerprogrammprodukt zur Ausführung durch mindestens einen Computer (14) zum automatischen Erzeugen eines Zeichnungssymbols (56) in einer Zeichnung (52), wobei die Zeichnung (52) eine Ansicht eines Modells (10) darstellt, das Modell (10) durch eine von dem CAD-Computerprogrammprodukt verarbeitete Modelldatenstruktur (18) repräsentiert wird, und das CAD-Computerprogrammprodukt Befehle aufweist, um den mindestens einen Computer (14) zu veranlassen, die Schritte des Verfahrens nach einem der Ansprüche 1 bis 10 auszuführen.

12. Eine Vorrichtung mit mindestens einem Computer (14), wobei der Computer so programmiert ist, daß er die Schritte des Verfahrens nach einem der Ansprüche 1 bis 10 ausführt.

## Revendications

1. Procédé de génération automatique, au moyen d'un programme de CAO, d'un symbole de dessin (56) dans un dessin (52), ledit dessin (52) représentant une vue d'un modèle (10), ledit modèle (10) étant représenté par une structure de données de modèle (18) traitée par ledit programme de CAO, ledit procédé comprenant les étapes consistant à :
- créer un objet d'attribut (34), ledit objet d'attribut (34) représentant un attribut (12) d'au moins une entité dudit modèle (10), ledit attribut (12) ayant une portée choisie parmi une pluralité de portées différentes, ladite portée correspondant au type d'entités du modèle (10) concerné par ledit attribut (12),
- associer ledit objet d'attribut (34) à ladite structure de données de modèle (18) pour constituer une structure de données de modèle étendue (36) ultérieurement susceptible d'être traitée par ledit programme de CAO,
- générer ledit dessin (52) à partir de ladite structure de données de modèle étendue (36), ledit dessin (52) représentant ladite entité dudit modèle (10) au moins partiellement, et. comprenant en outre un symbole de dessin (56) qui représente ledit attribut (12), ledit symbole de dessin (56) étant représenté en association graphique avec ladite entité au moins partiellement représentée dudit modèle (10).

2. Procédé selon la revendication 1, dans lequel, dans ladite structure de données de modèle étendue (36), ledit objet d'attribut (34) est lié avec au moins un élément de ladite structure de données de modèle (18) qui représente ladite au moins une entité dudit modèle (10) à laquelle se réfère ledit attribut (12), ce lien étant placé entre ledit attribut (12) et ladite entité dudit modèle (10).

3. Procédé selon la revendication 2, dans lequel ledit attribut (12) reste lié à ladite entité dudit modèle (10) lorsque ledit modèle (10) est stocké et/ou ladite entité est réutilisée dans un autre modèle.

4. Procédé selon l'une des revendications 1 à 3, dans lequel ledit symbole de dessin (56) correspond à un objet de symbole de dessin (60) qui est associé audit objet d'attribut (34).

5. Procédé selon la revendication 4, comprenant en outre les étapes consistant à :
- recevoir une commande destinée à modifier ledit symbole de dessin (56),
- modifier ledit objet de symbole de dessin (60) de manière correspondante, et
- modifier ledit objet d'attribut (34) de manière correspondante.

6. Procédé selon l'une des revendications 1 à 5, dans lequel ledit modèle (10) est un modèle 3D, et/ou dans lequel ledit dessin (52) est une vue 2D dudit modèle (10).

7. Procédé selon l'une des revendications 1 à 6, dans lequel ladite pluralité de portées différentes inclut des portées d'attributs (12) qui concernent des entités de type de face (10) dudit modèle (10) et/ou des entités de type de bordure dudit modèle (10).

8. Procédé selon l'une des revendications 1 à 7, dans lequel ledit attribut (12) appartient à une pluralité de types d'attributs différents.

9. Procédé selon l'une des revendications 1 à 8, dans lequel ledit symbole de dessin (56) comprend une forme graphique et une indication alphanumérique ou numérique ou textuelle, et dans lequel ledit objet d'attribut (34) comprend une valeur d'attribut représentée par ladite indication.

10. Procédé selon l'une des revendications 1 à 9, dans lequel ledit symbole de dessin (56) est automatiquement généré pour être conforme à une norme de dessin choisie parmi une pluralité de normes de dessin possibles.

11. Produit de programme informatique de CAO destiné à être exécuté par au moins un ordinateur (14) pour la génération automatique d'un symbole de dessin (56) dans un dessin (52), ledit dessin (52) représentant une vue d'un modèle (10), ledit modèle (10) étant représenté par une structure de données de modèle (18) traitée par ledit produit de programme informatique de CAO, ledit produit de programme informatique de CAO comprenant des instructions destinées à faire en sorte que ledit au moins un ordinateur (14) mette en oeuvre les étapes du procédé conforme à l'une des revendications 1 à 10.

12. Dispositif comprenant au moins un ordinateur (14), ledit ordinateur (14) étant programmé pour mettre en oeuvre les étapes du procédé conforme à l'une des revendications 1 à 10.
